# EUROPEAN PATENT SPECIFICATION

(11) **EP 0 644 293 B1**
(45) Date of publication and mention of the grant of the patent: **21.01.1998**
(21) Application number: 94114666.4
(22) Date of filing: 17.09.1994
(51) Int. Cl.: D21H 11/12, D21H 17/02, A23K 1/14

(54) **Process for manufacturing paper from sugar-beet pulp and paper thus obtained**
Verfahren zur Herstellung von Papier aus Zuckerrübenpulpe, und hergestelltes Papier
Procédé de fabrication de papier à partir de pulpe de betterave à sucre, et papier obtenu

(30) Priority: 21.09.1993 IT VA930020
(43) Date of publication of application: 22.03.1995
(73) Proprietor: CARTIERA FAVINI S.p.A., Rossano Veneto, Vicenza (IT)
(72) Inventor: Vaccari, Giuseppe, I-45039 Stienta (RO) (IT); Nicolucci, Clemente, Carmignano di Brenta, Padova (IT); Mantovani, Giorgio, I-44100 Ferrara (IT); Monegato, Achille, I-31037 Loria TV (IT)

(56) References cited:
- FR-A- 2 359 920
- FR-A- 2 624 531

## Description

### Background of the Invention.

The present invention refers to a process for manufacturing paper using integral sugar-beet pulp. The following description refers especially to paper, though the process described is equally useful for the manufacture of cardboard which is therefore included as part of this invention.

In the manufacturing process of sugar from sugar-beet, the beet passes through automatic slicers that reduce it into small and thin triangular-shape strips (cossettes) to facilitate extraction of the sugar-content.

The beet-cell walls are scarcely permeable to the components of the solution inside the cell, but at 60°C they contract and can be extracted by means of water to obtain a raw sugar solution (raw juice) and a solid residual of exhausted cossettes (sugar-beet pulp).

The sugar-beet pulp is usually pressed to remove the excess water that swells it, then it is treated to prevent fermentation, dried and utilised whenever possible as supplements for livestock feed.

By considering that about 1.5 million tons (dry basis) of sugar-beet pulp are produced every year in Italy alone, it is easy to understand the interest in finding other uses for this product. Such uses must facilitate its consumption and at the same time offer possible economical exploitation.

To the Applicant's knowledge, nobody up to now has used this integral sugar-beet pulp as such directly as a substitute of cellulose or other components of paper, as for example the mineral fillers, for manufacturing paper.

### Summary of the Invention

The present invention utilize the sugar-beet pulp in its integral form for manufacturing paper, and this represents a fundamental aspect of the present invention.

Recently, the Applicant described in EP-A-0 565 920 (priority of 16.04.92 and published 20.10.93) a paper-manufacturing process which foresees the use of integral seaweed.

From FR-A-2 359 920 there is known a process for the production of a material from sugar beet pulp. The beet pulp is micronized to a size of between 0.1-10 mm, whereafter it is pressed and heat heated to obtain a sheet which can be used as e.g. feed stock for animals.

Continuing research on the potential use of natural and vegetable substances, particularly the low-cost waste materials deriving from other manufacturing processes, for paper manufacturing, the Applicant has now found it possible to utilise advantageously sugar-beet pulp.

The latter is used in part or in total substitution of mineral fillers normally put in paper and in substitution of part of the actual cellulose. According to the invention, the paper, therefore, has the basic property of containing from 1% to 50% in weight (on dry basis), preferably from 5% to 40% in weight (on dry basis) of sugar-beet pulp.

According to a fundamental aspect of this invention, sugar-beet pulp is used in its integral form for manufacturing paper, without removing those non-cellulose substances contained in it.

Sugar-beet pulp is ivory-white in colour that, however, becomes greyish due to enzymatic phenomena or heat degradation.

Tyrosine, in the presence of the tyrosinase enzyme widely present in sugar-beet, and in oxidising environments (air), undergoes a series of enzymatic reactions which promote the grey/dark colouring caused by not-well defined compounds and referred to by the general term "melanines".

Certain equipment used in the industrial drying of pressed sugar-beet pulp, and which facilitate contacts between sugar-beet pulp and air, appear to be the main causes of the dark colour of dry sugar-beet pulp normally available in commerce. The heat degradation, which occurs from 150°C upward, further degrades the material making it increasingly darker according to the technology, period of contact and temperature of the hot flue gases used as drying agents.

A raw material for the manufacture of high-grade white paper can be easily obtained from beet-sugar pulp by using anaerobic diffusers, which prevent contact between air and sugar-beet pulp, by treating with reducing chemicals like sulphur dioxide and the bisulphites and by drying at low temperature (<100°C) (as, for example, by the thin layer method).

According to a basic feature of the present invention, the sugar-beet pulp is dried at a temperature not higher than 150°C, up to a water content of less than 20% in weight, and then ground to powder (flour) by micronising mills and by using the technologies commonly used in making flours for food. Also, in order to save energy and especially for short-term and nearby uses, even with regard to the incidence of transport costs, it is possible to grind this material suspended in water and to preserve it as slurries with a dry-content of between 1% and 70% in weight.

To prevent fermentation and to improve the preservation of these slurries, the pasteurisation methods used in the food sector (e.g. in the fruit-juice field) and the dairy sector (long-life milk) may be used, by heating to a temperature of 125°C for periods of 30 to 60 seconds or by irradiation with penetrating rays.

When put in the paper mix, a part of the sugar-beet pulp may undergo a solubilisation process, particularly concerning the inorganic salts, pectic substances and polysaccharides. In the preferred embodiments of the invention, the ground sugar-beet pulp is mixed with typical quantities, 1% to 30%, of substances (colloids or agglomerates) which reduce the solubility in water of their components.

Suitable substances to said purpose are starches, partly cationised starches, aluminium salts, especially sulphate and polychloride, iron sulphate, cationising substances.

Typically, when 1% in weight of sugar-beet pulp flour (ash at 525°C=10% in weight, size of particles of between 1 and 500 µm) is dispersed in water at room temperature, the electrical conductivity of the dispersion increases from 355µS after one hour to 430 µS after 24 hours, whereas the chemical oxygen demand (COD) goes from 800 ppm after one hour to 1400 ppm after 24 hours.

The limited solubilisation of organic matter and mineral salts during permanence of material in slurries is further reduced by retention treatments and clarification of water used in the papermaking system.

Substitution of inorganic fillers with vegetable fillers coming from the residuals of sugar-beet, which are compatible with animal feed, also implies a possible alternative use for the paper thus obtained. After being utilised, the paper can be conveniently disposed of for making livestock feed products for animal use in an amount of between 1% and 80% on the total.

According to a fundamental feature of the present invention, the process for manufacturing paper containing integral sugar-beet pulp comprises the following steps:
a) the sugar-beet pulp is dried at a temperature lower than 150°C to a residual water content of less than 20% in weight and is then micronised by food-flour micronising systems and sifted in order to obtain particle sizes of between 0.1 and 500 µm, preferably between 1 and 100 µm;
b) this micronised sugar-beet pulp is added, in quantities of 1 to 50% in mix weight, to the cellulose mix for manufacturing paper and the mix thus obtained is converted into paper in the paper- machine.

### DETAILED DESCRIPTION OF THE INVENTION

A more complete understanding of the present invention will be provided in relation to the following examples which are understood to be non-limiting to the basic inventive concepts of the present invention.

Typically the sugar-beet pulp used in the examples contains from 26 to 35% of carbohydrates (polysaccharides), from 26 to 35% of pectic substances, from 22 to 33% of cellulose, from 4.5 to 5% mineral substances, from 3.5 to 6.5% of lignin and from 5 to 5.5% of protein (all these percentages being by weight on dry basis).

### Example 1

100 kg of dark brown sugar-beet pulp, consisting of 2-3 cm long strips, were ground in a hammer mill with a 500 µm sieve and reduced to average sizes of 50 µm (ranging from 1 to 500 µm), with an apparent specific weight equal to 0.69 kg/dm³ and with an ash-content (at 525°C) of 10%. The flour thus obtained is then used to hand-make sheets of paper (according to standards ATICELCA MC 218-79). The characteristics of the paper obtained, with grammage of approx. 170g/m², bleached chemical cellulose composition (70% short fibre, 30% long fibre) and 4% CaCO₃, were compared with reference samples made under the same conditions and with the same raw materials, but without sugar-beet pulp, in the following table 1.

**TABLE 1**

| | | | | | | |
|---|---|---|---|---|---|---|
| concentration | % | 0 | 5 | 10 | 20 | 40 |
| grammage | g/m² | 174 | 171 | 171 | 171 | 163 |
| thickness | µm | 56 | 251 | 253 | 265 | 259 |
| bulk | kg/dm³ | 1.47 | 1.47 | 1.48 | 1.55 | 1.59 |
| breaking length | Km | 3.7 | 3.6 | 3.5 | 3.0 | 2.7 |
| tensile strength | % | 1.7 | 1.9 | 1.7 | 1.9 | 1.9 |
| burst | kg/cm² | 3.1 | 3.0 | 2.9 | 2.6 | 1.9 |
| tearing Elmendorf | kN | 156 | 144 | 136 | 116 | 96 |
| whiteness (photovolt) | % | 87 | 73 | 66 | 56 | 45 |
| ash (525°C) | % | 4.0 | 4.2 | 4.8 | 5.6 | 7.2 |

### Example 2

A mix consisting of 570 kg white recycled paper coming from paper-making scrap and 100 kg of ground sugar-beet pulp, as described in example 1, is fed into a (approx.) 700 kg/hour capacity paper-machine. Diketonic-type synthetic sizing agent (AKD) is added to the mix to make the paper suitable for writing with water-based inks and cationic starch is added to increase its retentive power. The web delivery speed was adjusted to 60 m/min. The paper-machine was automatically controlled by an Accuray 1180 Micro Plus system for grammage, moisture, thickness, opacity and whiteness. The paper obtained (550 kg net of scrap and delivery) had a grammage of approximately 90 g/m², a typical dark speckled appearance, and was perfectly writable, photocopiable and printable. The following Table 2 shows the main characteristics of the paper obtained, as compared to paper manufactured under the same operative conditions, with the same additives (bonding agents, ancillaries and starch) but without dried and ground sugar-beet pulp.
As may be clearly seen, the paper obtained in the above mentioned examples has excellent qualities and can be advantageously used for the same uses as those intended for similar paper not containing sugar-beet pulp.

**TABLE 2**

| pulp | | reference | sugar-beet |
|---|---|---|---|
| grammage | g/m² | 90 | 90 |
| thickness | µm | 99 | 99 |
| bulk | dm³/kg | 1,10 | 1,10 |
| whiteness | % | 93 | 63 |
| opacity | % | 83 | 92 |
| ash (525°C) | % | 20 | 19 |
| ink flotation (Pelikan 4001) | min | >10 | >10 |
| Cobb (60 sec) | g/m² | 24 | 24 |
| smoothness (Gurley 100ml) | sec | 200 | 170 |
| air permeability (Gurley 100ml) | sec | 80 | 150 |
| Dennison Waxes | N | 18 | 20 |
| burst | kg/cm² | 2.6 | 2.0 |
| breaking length | Km | 6.6-3.4 | 5.2-2.7 |
| tensile strength | % | 2.2-5.5 | 2.3-4.2 |
| tensile energy | J/m² | 95-120 | 70-80 |
| moisture content | % | 5.2 | 5.7 |
| relative humidity | % | 42 | 38 |
| tear Elmendorf | kN | 40-44 | 36-38 |
| stiffness Taber | mN | 2.1-1.2 | 2.2-1.4 |
| dust index (400 sheets) | | 1.0 | 1.1 |

## Claims

1. Process for making paper containing integral sugar-beet pulp comprising the following steps:
a) the sugar-beet pulp is dried at a temperature lower than 150°C to a residual water content of less than 20% in weight and is then micronised by food-flour micronising systems and sifted to reduced particle sizes of between 0.1 and 500 µm;
b) this micronised sugar-beet pulp is added, in quantities of 1% to 50% in weight of the cellulose mix to make the paper and the mix thus obtained is converted into paper in the paper-machine.

2. Process as per claim 1 characterised by the fact that the sugar-beet pulp is micronised in water in order to obtain suspensions with a 1% to 70% dry substance and these suspensions are pasteurised or irradiated to prevent fermentation.

3. Process as per claim 1 characterised by the fact that the sugar-beet pulp is micronised to a reduced particle size of from 1 to 100µm.

4. Process as per claim 1 characterised by the fact that the sugar-beet pulp is mixed with quantities of from 1% the 30% of substances which reduce the water solubility of the components in that sugar-beet pulp.

5. Process as per claim 4 characterised by the fact that said substances are selected from the group consisting of starches, partly cationised starches, aluminium salts, in particular sulphate and polychloride, iron sulphate, cationising substances and their mixtures.

6. Paper obtainable according to any of claims 1 to 5.

7. Paper as per claim 7 characterised by the fact that it contains from 5% to 40% in weight (on dry basis) of that sugar-beet pulp.

8. Paper as per claim 7 characterised by the fact that said particle size is of between 1 and 100 µm.

9. Use of paper as per claim 6 as a supplement for livestock feed.

## Patentansprüche

1. Verfahren zur Herstellung von Papier, das wesentlich Zuckerrübenbrei enthält, mit den folgenden Schritten:
a) der Zuckerrübenbrei wird bei einer Temperatur von unter 150°C bis zu einem Restwassergehalt von weniger als 20 Gew.% getrocknet, dann mit Hilfe von Futtermehl - Mahlsystemen feingemahlen und gesiebt, so daß Teilchengrößen zwischen 0,1 und 500 µm erhalten werden,
b) der feingemahlene Zuckerrübenbrei wird in Mengen von 1 bis 50 Gew.% der Zellulosemischung für die Papierherstellung zugefügt, worauf die so erhaltene Mischung in der Papiermaschine in Papier umgewandelt wird.

2. Verfahren nach Anspruch 1, dadurch gekennzeichnet, daß der Zuckerrübenbrei in Wasser zerkleinert wird, um Suspensionen mit 1% bis 70% Trockenmasse herzustellen, worauf diese Suspensionen zur Verhinderung von Fermentation pasteurisiert oder bestrahlt werden.

3. Verfahren nach Anspruch 1, dadurch gekennzeichnet, daß der Zuckerrübenbrei so vermahlen wird, daß Teilchengrößen zwischen 1 µm und 100 µm erhalten werden.

4. Verfahren nach Anspruch 1, dadurch gekennzeichnet, daß der Zuckerrübenbrei mit Substanzen in Mengen zwischen 1 % und 30 % gemischt wird, die die Wasserlöslichkeit der Bestandteile des Zuckerrübenbreis reduzieren.

5. Verfahren nach Anspruch 4, dadurch gekennzeichnet, daß diese Substanzen gewählt werden aus der Gruppe, die Stärke, teilweise kationisierte Stärke, Aluminiumsalze, insbesondere Sulfate und Polychloride, Eisensulfate, kationisierende Substanzen und ihre Mischungen enthält.

6. Papier, hergestellt mit dem Verfahren nach einem der vorhergehenden Ansprüche.

7. Papier nach Anspruch 6, dadurch gekennzeichnet, daß es zwischen 5 und 40 Gew% (auf trockener Basis) des Zuckerrübenbreis enthält.

8. Papier nach Anspruch 7, dadurch gekennzeichnet, daß die Teilchengröße zwischen 1 und 100 µm liegt.

9. Verwendung eines Papieres nach Anspruch 6 als Zusatz für Viehfutter.

## Revendications

1. Procédé de fabrication de papier contenant de la pulpe complète de betterave à sucre comprenant les étapes suivantes :
a) la pulpe de betterave à sucre est séchée à une température inférieure à 150°C pour obtenir un contenu résiduel en eau de moins de 20% en poids, micronisée par des dispositifs de micronisation de farine alimentaire et tamisée pour réduire la taille des particules à des dimensions comprises entre 0,1 et 500 µm;
b) cette pulpe micronisée de betterave à sucre est ajoutée, en quantités allant de 1% à 50% en poids du mélange de cellulose destiné à la fabrication de papier, et le mélange ainsi obtenu étant transformé en papier dans la machine à papier.

2. Procédé selon la revendication 1, caractérisé en ce que la pulpe de betterave à sucre est micronisée dans l'eau de manière à obtenir des suspensions ayant de 1% à 70% de substance sèche, ces suspensions étant pasteurisées ou irradiées pour éviter leur fermentation.

3. Procédé selon la revendication 1, caractérisé en ce que la pulpe de betterave à sucre est micronisée de manière à obtenir une taille réduite de particules comprise entre 1 et 100 µm.

4. Procédé selon la revendication 1, caractérisé en ce que la pulpe de betterave à sucre est mélangée avec des quantités allant de 1% à 30% de substances réduisant la solubilité dans l'eau des composants de cette pulpe.

5. Procédé selon la revendication 4, caractérisé en ce que ces substances sont choisies dans le groupe composé d'amidons, d'amidons partiellement cationisés, de sels d'aluminium, en particulier le sulfate et le polychlorure, de substances cationisantes et de leurs mélanges.

6. Papier obtenu selon les revendications 1 à 5.

7. Papier selon la revendication 6, caractérisé en ce qu'il contient de 5% à 40% en poids (par rapport au poids sec) de pulpe de betterave à sucre.

8. Papier selon la revendication 7, caractérisé en ce que la taille des particules est comprise entre 1 et 100 µm.

9. Utilisation de papier selon la revendication 6 comme complément alimentaire pour bétail.
